# EUROPEAN PATENT APPLICATION

(11) **EP 1 180 834 A2**
(43) Date of publication of application: **20.02.2002**
(21) Application number: 01305665.0
(22) Date of filing: 29.06.2001
(51) Int. Cl.: H01S 3/11, B23K 26/00

(54) **Laser and method for material processing**

(30) Priority: 29.06.2000 US 605977
(71) Applicant: GENERAL ELECTRIC COMPANY, Schenectady, NY 12345 (US)
(72) Inventor: Unternahrer, Josef Robert, Niskayuna, New York 12309 (US); Lotshaw, William Taylor, Niskayuna, New York 12309 (US); Kulka, Mark Jon, Ballston Spa, New York 12020 (US)
(74) Representative: Pedder, James Cuthbert

(57) **Abstract**

A laser pulse format (pulse number, energy, peak power) is switched within a period of the laser duty cycle to optimize the quality of laser-machined features with respect to dimensional variance, heat-affected zone and process control. A single laser is used to generate a mixed-mode output pulse by varying losses in the laser resonator (500) to incorporate multiple distinct laser output modes in the duration of a single pulse and thereby derive the unique benefits associated with each selected mode of operation.

## Description

This invention is related to optimization of laser-machined features. In particular the invention relates to switching of a laser pulse format within a period of one pump cycle or between periods of pump cycles to control dimensional variance, control the heat-affected zone (HAZ), and achieve process control.

In the use of pulsed laser radiation for removal of material from a workpiece to achieve a particular form or dimensional specifications, the laser output parameters known to affect the material removal process include the instantaneous power (commonly referred to as peak power), duration, repetition frequency, and energy of the pulse. Collectively these parameters are called the "pulse format". Typically these parameters are fixed within a period of the laser pump cycle for specific processing applications (e.g., a specific material, a specific feature to be machined, etc).

Distinct operating modes of lasers possess distinct process capabilities that derive from differences in the nature of the laser-material interaction due to the laser pulse duration, energy content, pulse repetition frequency, and wavelength. Specifically, high peak-power operating modes resulting from loss modulation such as mode-locked, Q-switched, repetitively Q-switched (called "burst mode") at various repetition rates, and mode-locked plus Q-switched, have resulted in substantial reductions in process-induced damage such as micro-cracking and interfacial disruption, extent of the heat-affected zone, reduction of recast, and reduction of chaotic dimensional variances such as diameter fluctuations in drilled holes. On the negative side, the high peak-power operating modes have sometimes exhibited reduced process speed or efficiency (as measured by material removed per unit laser energy).

In the prior art the laser pulse format has been modified during the pump cycle by superimposing two distinct output modes of independent "free running" (unmodulated) laser pulses. Superimposing, however, was achieved using two rod crystals, each with its own flashlamp and power supply, because the pulse format modification was created at the power supply level. A method of superimposing laser pulses in this manner has been described in an article entitled, "Pulsed Kilowatt Nd:YAG Laser with Fiber Optic Beam Delivery," P. Verboven, Proc. SPIE Vol. 2206, p. 416-425 (1994).

It is desirable to provide a simplified and more adaptive method and apparatus for altering laser pulse formats in a short period of time so as to control dimensional variance, control the heat affected zone (HAZ), and achieve process control.

A method is presented to switch the laser pulse format (pulse rate, energy, peak power) within or between periods of the laser pump cycle to optimize the quality of laser-machined features with respect to dimensional variance, heat-affected zone, and process control. The temporal mode is altered within or between pump cycles so that Q-switched, free-running, or mode-locked output modes are combined or interleaved without the need for multiple independent lasers. A non-monotonic variation of the losses induced in the resonator of the single laser alters the laser output mode as desired to attain the benefits of the various modes.

The invention will now be described in greater detail, by way of example, with reference to the drawings, in which:-
Figure 1 depicts a graph of a typical laser pump pulse;
Figure 2 depicts the optical power output of a repetitively Q-switched laser resultant from the pump pulse of Figure 1;
Figure 3 depicts the optical power output of a mixed-mode laser resultant from the present invention wherein a free-running mode precedes a repetitively Q-switched mode;
Figure 4 depicts the optical power output of a mixed-mode laser resultant from the present invention wherein a repetitively Q-switched mode precedes a free-running mode;
Figure 5 is a block diagram of a Q-switched laser system operable in accordance with a preferred embodiment of the invention; and
Figure 6 is a block diagram showing details of the logic circuitry employed in the system of Figure 5.

The laser pulse format is typically held constant during either a specific process cycle or for a given period of laser operation. However, variation of the laser output format within or between pump cycles results in altered conditions for specific processes (including hole drilling and material removal in general) that can result in substantially superior quality in the machined features. Such variations are effected by gating or otherwise varying the action of laser modulators according to specific regimens within a single pump cycle of the laser.

In pulsed solid-state lasers such as Nd:YAG the free running (quasi-*cw*) mode begins with a number of spikes (so-called "relaxation-oscillation") followed by a period of continuous (*cw*) lasing. This kind of variation of the output power, although often desirable, is relatively uncontrolled and non-adaptive. In a preferred embodiment, the invention generates a pulse format controllable within each pump cycle. For example, such a pulse format could consist of a free running period either preceded or followed by a burst of Q-switched pulses. In the latter case this approach of initiating the hole-drilling process has been observed to result in small diameter holes (of the order of 0.02") of higher quality than can be achieved when the mode consists of only a burst of Q-switched micro-pulses for the same output energy.

In the present invention only one crystal, one pump source, and one power supply are needed. In a preferred embodiment of the invention the controlled pulse format is created by repetitively Q-switching the laser (i.e., modulating or systematically varying the losses of the resonator) during part of the pump duration, and by letting it run free during the rest of the pump cycle for quasi-*cw* operation. Typical pulse durations of Q-switched lasers arc less than 100 ns. Anything substantially longer than that is often considered free running. Losses are introduced by a variety of methods known to those skilled in the art. The two most common loss inducers are either acousto-optical modulators (AOMs) or Pockels cells (PCs) in cooperation with a polarizer. AOMs use an acoustic (mechanical) wave in a block of fused silica that acts as a grating that deflects part of the optical beam out of the resonator. The acoustic wave is generated by RF (radio frequency) power supplied to a transducer that vibrates the fused silica block. The AOM has an optical transmission of about 50% when the RF is on, but 100% when the RF is off.

In a second common approach to generating losses in a resonator, Pockels cells work on the polarization of the optical beam. When an appropriate electric field is applied to certain crystals, they become birefringent and change the polarization of the optical beam. "Birefringent" is the property of anisotropic crystals to split a beam of light into two polarized rays. A subsequent polarizer applied to the optical beam eliminates almost 100% of the beam. Hence, a PC/polarizer combination has almost zero optical transmission when the electric field is on, but near 100% when it is off.

The threshold point above which oscillation occurs is where the gain is higher than the losses. In Q-switching, the losses induced stop the oscillation for a period of time. During that time, the pump process scores energy in the gain medium, thus generating gain. When the losses are suddenly removed, *i.e.*, the Q-value of the resonator is switched from low to high, and the laser experiences a large gain surplus. To relieve this surplus the laser generates a large pulse to drive the laser back towards equilibrium. These large pulses arc called "Q-switch pulses." In a laser in steady. state (equilibrium), the gain and the losses exactly compensate each other.

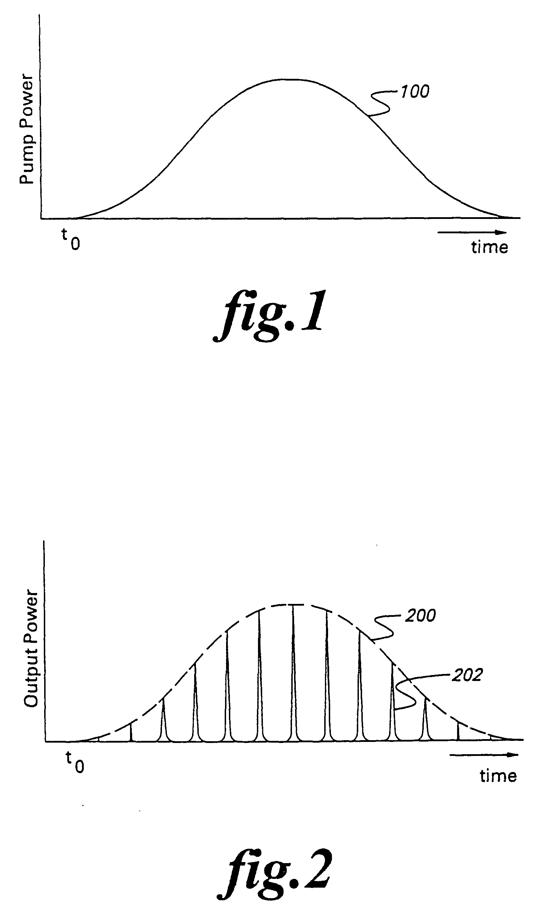

Figure 1 depicts a typical pump pulse 100. This is a generic pump pulse in that other pump pulses, in particular, pulses that are more square shaped, could be used. Referring to Figure 2, a common output format from near-infrared solid-state lasers is the "burst mode" in which a train of Q-switched or other "micro-pulses" 202 is generated within an envelope 200 defined by the pump pulse from arc-lamps, laser diodes, etc.

A mixed-mode laser minimally combines multiple pulse formats within a single pump cycle, or interleaves multiple pulse formats on successive pump cycles. The present invention accomplishes such combinations without the need for multiple independent lasers. In an exemplary embodiment, Q-switched and free-running modes are combined; however, any combination of pulse formats is possible without departing from the inventive concept.

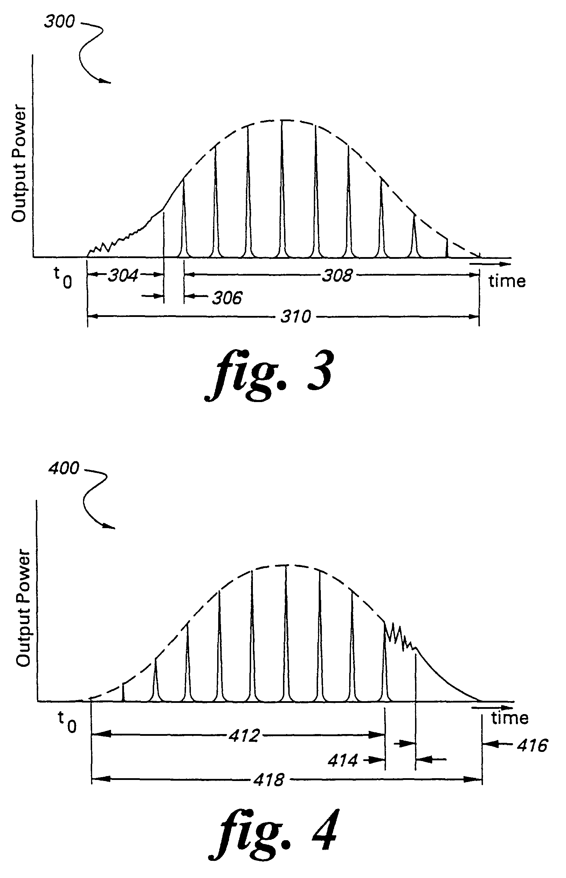

A mixed-mode pulse 300 of time interval 310 is generally shown in Figure 3. The mode of operation is modified by delaying the onset of modulation with respect to the start of the pump pulse, allowing the laser to oscillate quasi-*cw* for a brief time followed by a period of Q-switched or other micro-pulse formats. In this mode of operation, the time interval 310 is comprised of three segments. Relaxation oscillations comprise the first segment 304. After the relaxation oscillations subside at the end of segment 304, the optical power output closely aligns with the pump pulse shape during the second segment 306. Time segments 304 and 306 comprise what is known as quasi-cw laser output In the third segment 308, the laser is put into a Q-switched burst mode operation until the end of the time interval 310.

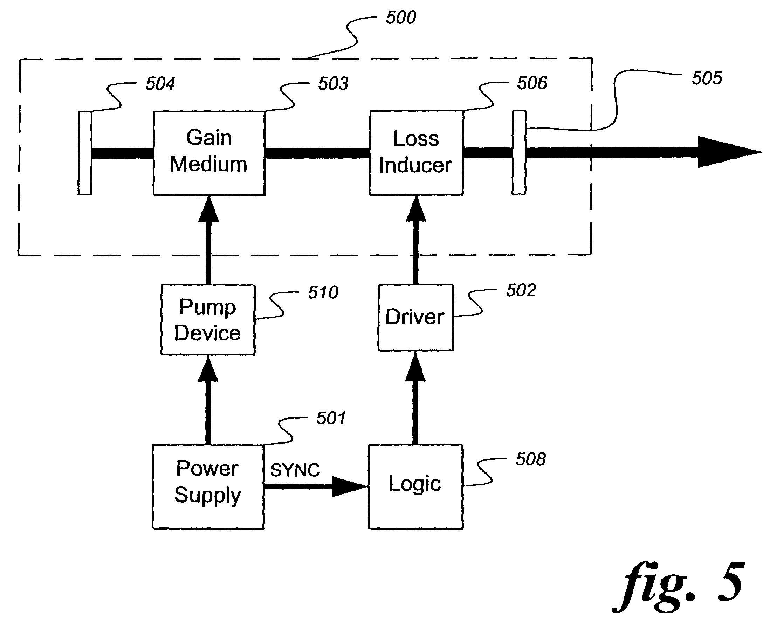

Conversely the modulation may be terminated prior to the end of the pump pulse, thereby allowing Q-switched or other "micro-pulses" to be followed by quasi-cw output at the end of the pump cycle as shown in Figure 4. A mixed-mode pulse 400 is shown in Figure 4, wherein the quasi-*cw* mode occurs after the Q-switched mode. In this format, the laser pulse interval 418 is again divided into three segments wherein the laser operates in a Q-switched or other micro burst mode for the first segment 412. After the Q-switched mode completes at the end of segment 412, the output optical power goes into relaxation oscillation in second time segment 414. In the third time segment 416 the relaxation oscillation subsides and the laser output power closely aligns with the pump pulse shape until the end of the time interval 418.

The Q-switched laser employed in a preferred embodiment of the invention shown in Figure 5 comprises a resonator 500 including a gain medium 503 stimulated or pumped by a pump device 510, such as an arc lamp, laser diode, etc., which in turn, is energized by a power supply 501. Resonance occurs in a cavity defined by reflecting surfaces such as a mirror 504 and an output coupler 505 which may comprise a half-silvered mirror. A loss inducer 506 situated within the cavity and driven by a driver circuit 502 modulates the amplitude of the laser beam 507 emitted by resonator 500. Logic circuitry 508, driven in synchronism with pump power supply 501, controls driver circuit 502 to vary the modulation of loss inducer 506 within a period of the laser duty cycle in a manner that produces desired modification of the laser pulse format for achieving removal of material from a workpiece to arrive at a particular form or particular dimensional specifications.

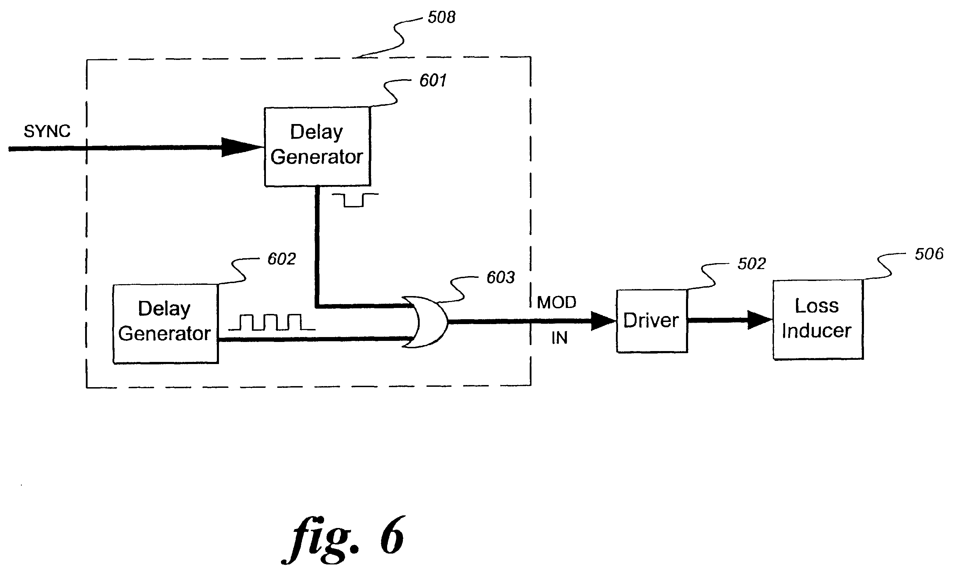

Figure 6 shows the logic circuitry 508 of Figure 5 in greater detail, as comprising a pair of delay generators 601 and 602 whose outputs are coupled to an OR gate. OR gate 603 provides the modulation input signal from logic circuitry 508 to driver 502. The delay generators are obtainable, for example, as modules DG-535 from Stanford Research Systems, Palo Alto, CA.

Delay generator 601 produces laser output pulses in synchronism with operation of power supply 501, shown in Figure 5. These pulses, which may be of duration on the order of 5 milliseconds, can be delayed with respect to onset of the pump pulse from pump device 510 of Figure 5, thus delaying the onset of modulation allowing the laser to oscillate quasi-*cw*, as indicated by segments 304 and 306 in Figure 3. Thereafter, in the presence of a pulse from delay generator 601, delay generator 602 may be triggered to produce relatively short pulses, such as 2 microseconds in duration, placing the laser into a Q.switched burst mode, as indicated by laser output pulse segment 308 in Figure 3, until the end of the pump pulse from pump device 510 of Figure 5. Alternatively the laser may be operated to produce Q-switched or "micro-pulses" by a pulse from delay generator 601 and pulses originated from delay generator 602 during the pump pulse from pump device 510 of Figure 5, as shown by segment 412 in Figure 4. This may then be followed by termination of pulses from delay generator 602, thus terminating the Q-switched or micro burst mode and allowing the laser output power to go into relaxation oscillation during time segment 414 in Figure 4 and thereafter aligning with the pump pulse shape during time segment 416 in Figure 4 when the pulse from delay generator 601 terminates.

For the sake of good order, various features of the invention are set out in the following clauses:
1. A method of creating a mixed mode laser pulse from a single source comprising:
   varying loss modulation of the laser at least one time to alter the laser output mode.
2. The method of clause 1 wherein said loss modulation is varied during a single pump cycle (300) or between successive pump cycles.
3. The method of clause 2 wherein output modes of said laser are selected from the group of output modes consisting of Q-switched, repetitively Q-switched, mode-locked, free-running, and continuous.
4. The method of clause further comprising selecting a combination of laser output modes based a on desired impact on a workpiece.
5. The method of clause 1 wherein said loss modulation is varied between successive pump cycles.
6. The method of clause 5 wherein output modes of said laser are selected froth the group consisting of Q-switched, repetitively Q-switched, mode locked, free running, and continuous.
7. The method clause 6 further comprising selecting a combination of laser output modes based upon desired impact on a workpiece.
8. A laser capable of multifarious output modes comprising:
   a resonator (500) that generates an optical beam in at least one pump cycle;
   a loss inducer (506) positioned within said optical beam (507) and capable of causing variable losses in said optical beam; and
   logic circuitry (508) for varying modulation of said loss inducer.
9. The laser of clause 8 wherein said loss inducer is adapted to alter one or more output parameters of said resonator, causing said resonator to change the laser output mode.
10. The laser of clause 8 wherein said loss inducer is adapted to alter said optical beats to change the laser output mode during one pump cycle (300) or between successive pump cycles.
11. The laser of clause 10, wherein said output modes are selected from the soup consisting of Q-switched, repetitively Q-switched, mode-locked, free-running, and continuous.
12. A laser capable of multifarious output modes comprising:
   a resonator (500) for generating an optical beam in one or more pump cycles; and
   means (506,502,508) for inducing losses in said resonator so as to cause losses in said optical beam.
13. The laser of clause 12 wherein said means for inducing losses is adapted to alter at least one input parameter to said resonator, to cause said resonator to change from one output mode to another output mode.
14. The laser of clause 13 wherein the change from one output mode to another output mode is constrained to occur during one pump cycle (300).
15. The laser of clause 14, wherein said output anodes are selected from the group of output modes consisting of Q-switched, repetitively Q-switched. mode-locked, free-running, and continuous.
16. The laser of clause 13 wherein the change from one output mode to another output mode is constrained to occur between successive pump cycles.
17. The laser of clause 16, wherein said output modes are selected from the group of output modes consisting of Q-switched, repetitively Q-switched, mode-locked, free running and continuous.
18. A method of processing a material with a laser capable of multiple output modes comprising:
   applying power in a first output mode from said laser to said material; and, thereafter,
   applying power in a second output mode from said laser to said material.
19. The method of clause 18, wherein said fast output mode and said second output mode are independently selected from the group of output modes consisting of Q-switched, repetitive Q-switched, mode-locked, free-running, and continuous.
20. The method of clause 19 wherein selection of output modes is based upon desired impact on said material.
21. The method of clause 18, wherein said first output mode is free-running and said second output mode is repetitively Q-switched.
22. The method of clause 18, wherein said first output mode is repetitively Q-switched and said second output mode if free-running.
23. A laser system capable of producing a varied output format within a pump cycle, comprising;
   a resonator including a gain medium and a loss inducer aligned between reflecting surfaces;
   a pump device adapted to supply pump pulses to said gain medium;
   a driver adapted to modulate said loss inducer; and
   logic circuitry for controlling said driver in a manner to vary modulation of said loss inducer.
24. The laser system of clause 23 including a power supply for driving said pump device and synchronized with said logic circuitry.
25. The laser system of clause 24 wherein said logic circuitry comprises first and second delay generators and an OR gate, said first delay generator being synchronized to said power supply, said OR gate having inputs coupled to each of said first and second delay generators and having an output coupled to said driver.
26. The laser system of clause 25 wherein said first delay generator is adapted to produce an output pulse at a predetermined time relative to a pump pulse produced by said pump device, and said second delay generator is adapted to produce a plurality of output pulses of duration shorter than duration of the output pulse produced by said first delay generator and in the presence of said output pulse produced by said first pulse generator.

## Claims

1. A method of creating a mixed mode laser pulse from a single source comprising:
varying loss modulation of the laser at least one time to alter the laser output mode.

2. The method of claim 1 wherein said loss modulation is varied during a single pump cycle (300) or between successive pump cycles.

3. A laser capable of multifarious output modes comprising:
a resonator (500) that generates an optical beam in at least one pump cycle;
a loss inducer (506) positioned within said optical beam (507) and capable of causing variable losses in said optical beam; and
logic circuitry (508) for varying modulation of said loss inducer.

4. The laser of claim 3 wherein said loss inducer is adapted to alter one or more output parameters of said resonator, causing said resonator to change the laser output mode.

5. A laser capable of multifarious output modes comprising:
a resonator (500) for generating an optical beam in one or more pump cycles; and
means (506,502,508) for inducing losses in said resonator so as to cause losses in said optical beam.

6. The laser of claim 5 wherein said means for inducing losses is adapted to alter at least one input parameter to said resonator, to cause said resonator to change from one output mode to another output mode.

7. A method of processing a material with a laser capable of multiple output modes comprising:
applying power in a first output mode from said laser to said material; and, thereafter,
applying power in a second output mode from said laser to said material.

8. The method of claim 7, wherein said fast output mode and said second output mode are independently selected from the group of output modes consisting of Q-switched, repetitively
Q-switched, mode-locked, free-running, and continuous.

9. A laser system capable of producing a varied output format within a pump cycle, comprising;
a resonator including a gain medium and a loss inducer aligned between reflecting surfaces;
a pump device adapted to supply pump pulses to said gain medium;
a driver adapted to modulate said loss inducer; and
logic circuitry for controlling said driver in a manner to vary modulation of said loss inducer.

10. The laser system of claim 9 including a power supply for driving said pump device and synchronized with said logic circuitry.
